# EUROPÄISCHE PATENTANMELDUNG

(11) **EP 0 622 174 A1**
(43) Veröffentlichungstag der Anmeldung: **02.11.1994**
(21) Anmeldenummer: 94890071.7
(22) Anmeldetag: 20.04.1994
(51) Int. Cl.: B29D 31/00, B31D 3/02

(54) **Verfahren zum Herstellen von Leichtbaukernen**

(30) Priorität: 29.04.1993 AT 831/93
(71) Anmelder: Öllinger, Alois, Dipl.-Ing., A-4060 Leonding (AT)
(72) Erfinder: Öllinger, Alois, Dipl.-Ing., A-4060 Leonding (AT)
(74) Vertreter: Hübscher, Heiner, Dipl.-Ing.

(57) **Zusammenfassung**

Zum Herstellen von Leichtbaukernen (1), die aus einer Mehrzahl miteinander entlang paralleler, gleichmäßig verteilter Streifenbereiche (3) verbundener und zwischen den Verbindungsbereichen Hohlräume (4) bildender Materiallagen (2) bestehen, werden die Materiallagen (2) zusammengeschichtet, verbunden und gegebenenfalls imprägniert und nach einem Aushärten zugeschnitten.

Um eine besonders rationelle Kernherstellung zu erreichen, werden Lagenmaterialbänder (5) mit einer an die Höhe der herzustellenden Kerne (1) angepaßten Breite vorbereitet und in einer der Materiallagen (2) der Kerne (1) entsprechenden Anzahl zum Aufbau eines Bandpaketes (6) flächig zusammengeführt, worauf das entstehende Bandpaket (6) fortlaufend in hintereinander angeordneten Bearbeitungsstationen (14, 15, 16, 17, 18, 19, 20, 21) ausgerichtet, druck- und/oder wärmebehandelt, imprägniert, ausgehärtet, auseinandergezogen, mit Deckschichten (28) versehen, zerschnitten od. dgl. und dann in Stücke abgelängt wird.

## Beschreibung

Die Erfindung bezieht sich auf ein Verfahren zum Herstellen von Leichtbaukernen, bestehend aus einer Mehrzahl miteinander entlang paralleler, gleichmäßig verteilter Streifenbereiche verbundener und zwischen den Verbindungsbereichen Hohlräume bildender Materiallagen, bei dem die Materiallagen Zusammengeschichtet, verbunden und gegebenenfalls imprägniert und nach einem Aushärten zugeschnitten werden.

Solche Leichtbaukerne bestehen aus einzelnen, in Parallelebenen angeordneten Lagen aus Kunststoff, metallischen oder kunstharzimprägnierten Materialien od. dgl., die wellig profiliert und miteinander verbunden sind, was durch Verkleben mit Harzen und Klebstoffen erfolgt, so daß ein wabenartiger Leichtbau-Werkstoff, bei sechseckigen Hohlraumquerschnitten auch Honeycomb genannt, entsteht, der vor allem in Hohlraumlängsrichtungtrotz des geringen spezifischen Gewichtes erstaunlich druckfest ist und in der Flugzeug-, Schiffs- und Fahrzeugindustrie, aber auch in der Bauindustrie usw. meist als Kern für Formteile oder als Mittellage von Verbundplatten Verwendung findet. Bisher werden nun diese Leichtbau-Werkstoffe stückweise in Plattenform hergestellt, wozu das Material für die einzelnen Lagen in Bögen vorbereitet, streifenförmig mit Klebemittel bestrichen und in der erforderlichen Anzahl unter Einhaltung eines genauen Versatzes der Klebemittelstreifen von Lage zu Lage übereinandergeschichtet wird, worauf die Bögen in einer Presse unter Druck- und/oder Temperatureinwirkung entsprechend den Klebemittelstreifen miteinander verklebt und dann auseinandergezogen werden, so daß zwischen den verklebten Streifenbereichen längliche Hohlräume verbleiben. Diese Platten werden dann erforderlichenfalls zum Imprägnieren in Harz getaucht und aushärten gelassen und mittels einer Sägeeinrichtung quer zu den Hohlräumen in Leichtbaukerne gewünschter Dicke geschnitten. Bestehen die einzelnen Materiallagen beispielsweise aus Aluminium oder einem nicht zu imprägnierenden Material, ist Selbstverständlich ein Imprägnieren unnötig und der Leichtbaublock kann nach oder vor dem Auseinanderziehen sofort in entsprechend große Stücke zerteilt werden.

Dieses stückweise Herstellen der Leichtbaublöcke, die dann zu dem jeweils gewünschten Leichtbaukern zu zerschneiden sind, ist allerdings verhältnismäßig umständlich und zeitraubend und durch die Einzelbehandlung der Blöcke sowie unvermeidbaren Leerzeiten zwischen den einzelnen Behandlungs- und Bearbeitungsschritten auch sehr kostenintensiv. Das Zerschneiden der Blöcke verlangt außerdem wegen der großen Blockgeometrie außwendige und stabile Schneidwerkzeuge und verursacht damit erhebliche Materialverluste.

Der Erfindung liegt daher die Aufgabe zugrunde, diese Mängel zu beseitigen und ein Verfahren der eingangs geschilderten Art anzugeben, das eine besonders rationelle Fertigung von Leichtbaukernen gewährleistet.

Die Erfindung löst diese Aufgabe dadurch, daß Lagenmaterialbänder mit einer an die Höhe der herzustellenden Kerne angepaßten Breite vorbereitet und in einer der Materiallagen der Kerne entsprechenden Anzahl zum Aufbau eines Bandpaketes flächig zusammengeführt werden, worauf das entstehende Bandpaket fortlaufend in hintereinander angeordneten Bearbeitungsstationen ausgerichtet, druck- und/oder wärmebehandelt, imprägniert, ausgehärtet, auseinandergezogen, mit Deckschichten versehen, zerschnitten od. dgl. und dann in den Kernlängen entsprechende Stücke abgelängt wird.

Durch dieses Verfahren ergibt sich ein kontinuierlicher Strang eines Leichtbauwerkstoffes, der bereits die gewünschte Breite und Höhe besitzt und nur in entsprechend lange Stücke abgelängt zu werden braucht, um die jeweiligen Leichtbaukerne zu erhalten, wobei sich das Zuschneiden der Materialbänder und das Ablängen des Bandpaketes mit recht einfachen Werkzeugen und entsprechend geringeren Schnittverlusten durchführen lassen. Dabei kann während des kontinuierlichen Herstellungsablaufes der Bandpaketstrang in unterschiedlicher und an die jeweiligen Bedingungen angepaßter Weise behandelt und bearbeitet werden, so daß abhängig vom Ausgangsprodukt einerseits und den gewünschten Eigenschaften des Endproduktes anderseits das Bandpaket einfach in den erforderlichen Bearbeitungsstationen behandelt wird. So kann der Strang bedarfsweise imprägniert, wärmebehandelt, verpreßt, auseinandergezogen und ausgerichtet u. dgl. werden und es ist selbstverständlich möglich, je nach Anforderungen hinsichtlich des spezifischen Gewichtes, der Widerstandsfähigkeit und Belastbarkeit od. dgl. in ein oder mehreren Schritten zu imprägnieren und aushärten zu lassen. Je nach Verwendung des Klebemittels kann durch Druck- und/oder Wärmebehandlung die ausreichend feste Verbindung der einzelnen Materiallagen sichergestellt werden und nicht zuletzt kann selbstverständlich auch der fertigbehandelte Leichtbaukern-Strang durch der Höhe oder der Breite nach geführte Längsschnitte unterteilt werden, um Kerne entsprechend geteilter Höhe oder Breite herzustellen. Dabei bleibt es unwesentlich, ob und in welcher Weise die Lagenmaterialbänder selbst vorbearbeitet sind, wobei eine eventuelle Vorbearbeitung auch bereits im Zuge der Kernherstellung in einer der Zuführstation zum Aufbau des Bandpaketes vorgeordneten Bearbeitungsstation erfolgen kann, oder ob ein- oder mehrfach zusammengesetzte Materialbänder Verwendung finden u. dgl.. Durch das kontinuierliche Zusammen führen der Materialbänder zu einem Bandpaket und die kontinuierliche Verarbeitung des Bandpaketes in verschiedenen, wahlweise einsetzbaren Bearbeitungsschritten zu einem Leichtbaukern-Strang mit gewünschten Eigenschaften und das abschließende Ablängen in die jeweiligen Kerndimensionen, ergibt sich ein besonders rationelles Verfahren zur Kernherstellung, das Leerzeiten weitgehend vermeidet und eine optimale Nutzung der vorhandenen Bearbeitungskapazitäten erlaubt.

Werden die einzelnen Materialbänder liegend zugefördert und nach einem Aufkanten um einen Längsrand stehend zusammengeführt und weiterbehandelt, lassen sich die Materialbänder einerseits einfach von horizontal gelagerten Vorratsrollen abziehen und läßt sich anderseits dann das stehende Bandpaket problemlos mit Imprägnierflüssigkeit od. dgl. behandeln, die schwerkraftsbedingt von oben durch die Hohlräume hindurchfließen kann. Abgesehen davon werden auch das Ausrichten der einzelnen Bänder und andere Formgebungs- und Behandlungsschritte in hochgestellter Lage erleichtert.

Besonders vorteilhaft ist es, wenn zuerst Lagenmaterialbänder aus glatten und welligen Materialbändern zusammengesetzt und dann gleichgerichtet zusammengeführt werden, wodurch es zur Verarbeitung bereits vorgefertigter Verbundmaterialien, wie Wellpapiermaterialien oder entsprechend zusammengesetzter Lagen aus Aluminium, Kunststoff od. dgl., kommt. Die Lagenmaterialbänder sind wegen der glatten Bänder in Längsrichtung steif und lassen sich trotz der durch die welligen Bänder gegebenen räumlichen Ausdehnung gut handhaben, wobei durch das Anliegen jeweils eines welligen Bandes an einem glatten Band keinerlei Schwierigkeiten wegen des Versatzes der Verbindungsstellen benachbarter Lagenmaterilbänder auftreten und immer ein Wellenberg auf eine ebene Flächt trifft. Außerdem ist durch die vorgeformte Wellung ein nachträgliches Auseinanderziehen der verklebten Lagen unnötig und die Hohlräume entstehen jeweils zwischen den glatten und welligen Bändern ohne weiteres Zutun, wobei die glatten Lagen noch dazu die Aufnahmefähigkeit von Schubspannungskräften steigert.

Statt vorgefertigter Verbundmaterialien können selbstverständlich auch abwechselnd glatte und wellige Lagenmaterialbänder zu einem Bandpaket zusammengeführt werden, was zum gleichen Endergebnis führt und die Verwendung einzelner Materialbänder als Ausgangsmaterial erlaubt.

Besonders vorteilhaft ist es auch, wenn Lagematerialbänder und/oder Materialbänder aus imprägnierten Geweben, insbesondere Prepregs, verwendet werden, da so ein nachträgliches Tauchimprägnieren und Aushärten des aus Fasermaterial hergestellten Blockes entfällt und bereits fertig imprägnierte Ausgangsmaterialien einsetzbar sind. Dadurch ergeben sich nicht nur wirtschaftliche Vorteile, sondern es gibt keine Größenbeschränkung durch das Tauchen und vor allem werden durch die bessere Imprägnierung auch bessere physikalische Eigenschaften erzielt. Dazu kommt noch, daß zum Verbinden der Lagenmaterialbänder kein eigener Klebstoff verwendet werden muß und diese Verbindung einfach durch gemeinsames Aushärten erreicht wird.

Werden dabei auf das Bandpaket fortlaufend Deck- und/oder Seitenstreifen aufgebracht und Bandpaket und Streifen gemeinsam ausgehärtet, können gleichzeitig mit dem Verbinden der Lagen auch spezielle Deck- oder Seitenlagen kontinuierlich auf das Bandpaket aufkaschiert werden.

Um die Festigkeit der gegenseitigen Verbindung der einzelnen Materialbänder zu verbessern, können die Wellenbergbereiche der Lagenmaterialbänder vor dem Bandpaketaufbau mit Klebemittel versehen werden, so daß das Bandpaket dann eine entsprechend feste Klebeverbindung erhält, die höher belastbar ist als eine gegenseitige Verbindung beispielsweise lediglich durch das Imprägnieren od. dgl., wobei es dann auch möglich ist, die Lagenmaterialbänder und/oder Materialbänder vor dem Zusammenführen auszuhärten und dann erst miteinander zu verkleben.

Werden glatte, einseitig in Querstreifen mit regelmäßigen Abständen klebemittelversehene Lagematerialbänder verwendet und gleichgerichtet unter jeweiligem Versatz der Klebemittel-Querstreifen zusammengeführt, worauf das Bandpaket nach einer Druck- und/oder Wärmebehandlung zum Erreichen der Klebeverbindungen bis zu einer bestimmten Kernbreite auseinandergezogen und gegebenenfalls imprägniert und aushärten gelassen wird, entsteht ein polygonalwabenförmiger Querschnitt, wobei je nach dem Ausgangsmaterial ein nachträgliches Imprägnieren die Wabenstruktur verfestigt, was beispielsweise bei papierenem oder faserverstärktem Material notwendig ist, bei Aluminium od. dgl. aber nicht. Beim Auseinanderziehen des verklebten Bandpaketes ist dann auf eine entsprechende Verringerung der Vorschubgeschwindigkeit zu achten, damit es keine Störungen oder gar Beschädigungen gibt, wobei gewisse Dehnungsunterschiede aufgrund der Elastizität des Materials ohnehin ausgeglichen werden.

Nach einer weiteren Ausgestaltung der Erfindung können auch glatte und wellige Materiallagen abwechselnd oder aus jeweils einer glatten und welligen Materialbahn zusammengesetzte Materiallagen aufeinandergeschichtet werden, wobei vorzugsweise Materiallagen oder Materialbahnen aus imprägnierten Geweben oder Vliesen, insbesondere Prepregs, verwendet werden, so daß hier auch bei einer stückweisen Herstellung der Leichtbaukerne die Vorteile eines Kernaufbaues aus glatten und welligen Lagen bzw. aus Prepregslagen od. dgl. voll genutzt werden kann. Zusätzlich ist dabei die Möglichkeit gegeben, die Orientierung der welligen Lagen zu ändern, beispielsweise abwechselnd glatte und zueinander senkrecht gewellte Lagen aufeinanderzulegen, und damit Kerne mit verschiedenen Festigkeitseigenschaften herzustellen.

In der Zeichnung ist der Erfindungsgegenstand beispielsweise veranschaulicht, und zwar zeigen
- Fig. 1 und 2: zwei verschiedene, durch das erfindungsgemäße Verfahren herstellbare Kernstrukturen jeweils im Schaubild,
- Fig. 3: eine Anlage zur Durchführung des erfindungsgemäßen Verfahrens in einer schematischen Seitenansicht und
- Fig. 4: einen Teil dieser Anlage in Draufsicht größeren Maßstabes.

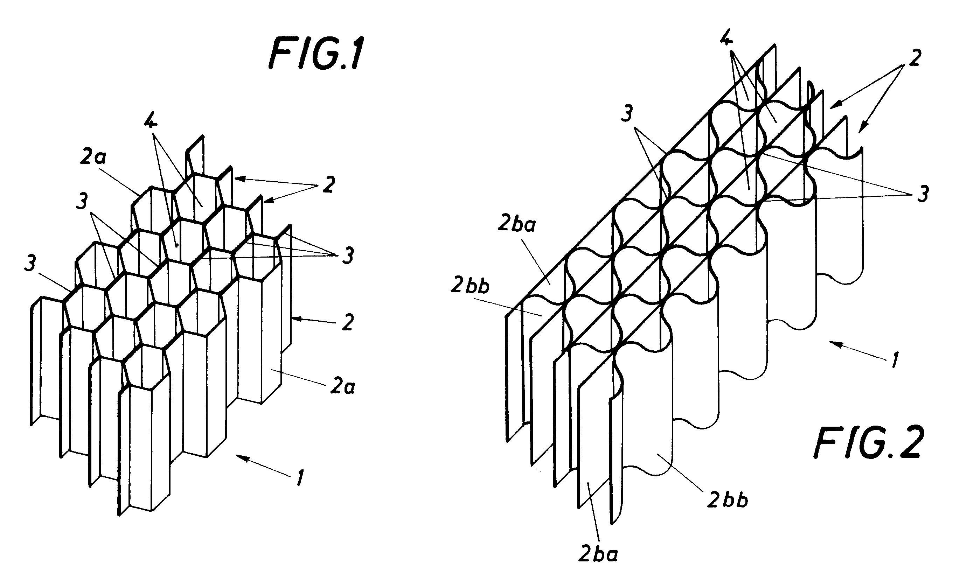

Leichtbaukerne 1 bestehen aus einer Mehrzahl in Parallelebenen angeordneter Materiallagen 2, die entlang paralleler, gleichmäßig verteilter Streifenbereiche 3 miteinander verbunden sind und zwischen den Verbindungsbereichen 3 Hohlräume 4 bilden. Als Material für die einzelnen Lagen 2 dienen Aluminium oder andere metallische Werkstoffe, Thermoplaste oder kunstharzimprägnierte Werkstoffe, wobei gemäß dem Ausführungsbeispiel nach Fig. 1 die Materiallagen 2a eine wellige, zu einander paarweise symmetrische Profilierung aufweisen und einen Kern mit sechseckiger Querschnittsstruktur bilden oder gemäß dem Ausführungsbeispiel nach Fig. 2 die Materiallagen 2b aus Wellpapier oder anderen Verbundmaterial bestehen, wodurch eine Kernstruktur mit abwechselnd glatten und welligen Lagen 2ba, 2bb zustande kommt.

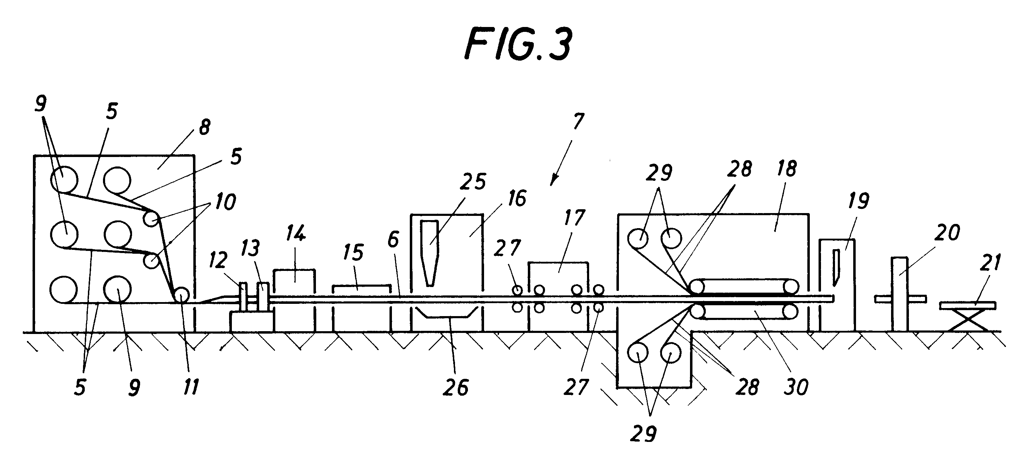

Um die Leichtbaukerne 1 rationell herstellen zu können, werden Lagenmaterialbänder 5 mit einer an die Höhe der herzustellenden Kerne 1 angepaßten Breite und in einer der Materiallagen der Kerne entsprechenden Anzahl zusammengeführt und zu einem Bandpaket 6 aneinandergedrückt, das dann kontinuierlich in hintereinander angeordneten Bearbeitungsstationen entsprechend behandelt und bearbeitet und schließlich durch einfaches Ablängen in entsprechende Leichtbaukerne zerschnitten wird. Dazu gibt es, wie in Fig. 3 angedeutet, eine Herstellungsanlage 7, die einen Speicher 8 mit der erforderlichen Anzahl von Speicherrollen 9 für die einzelnen Materialbänder 5 aufweist. Diese Materialbänder 5 werden über geeignete Führungsrollen 10, 11 von den horizontal gelagerten Speicherrollen 9 liegend abgezogen und dann mittels einer Führungseinrichtung 12 um einen Längsrand aufgekantet und durch seitliche Druckrollen 13 stehend zum Bandpaket 6 zusammengedrückt, so daß nun dieses Bandpaket als fortlaufender Strang durch die verschiedenen Behandlungsstationen, beispielsweise eine Preß- und Aushärtstation 14, eine Formgebungsstation 15, eine Imprägnierstation 16, eine Wärmebehandlungsstation 17, eine Beschichtungsstation 18 und eine Ablängstation 19, hindurchgeführt wird, wobei der Ablängstation 19 eine zusätzliche Längstrenneinrichtung 20 vor- oder nachgeordnet sein kann, an die dann eine Stapeleinrichtung 21 anschließt.

Die einzelnen Bearbeitungsstationen sind in Abhängigkeit vom Ausgangsmaterial einerseits und in Abhängigkeit von den Eigenschaften des Endproduktes anderseits eingerichtet und vorgesehen, wobei je nach Behandlungsart auch mehrere gleiche Stationen, wie Imprägnierstationen, Aushärtstationen, Beschichtungsstationen u. dgl. vorhanden sein können.

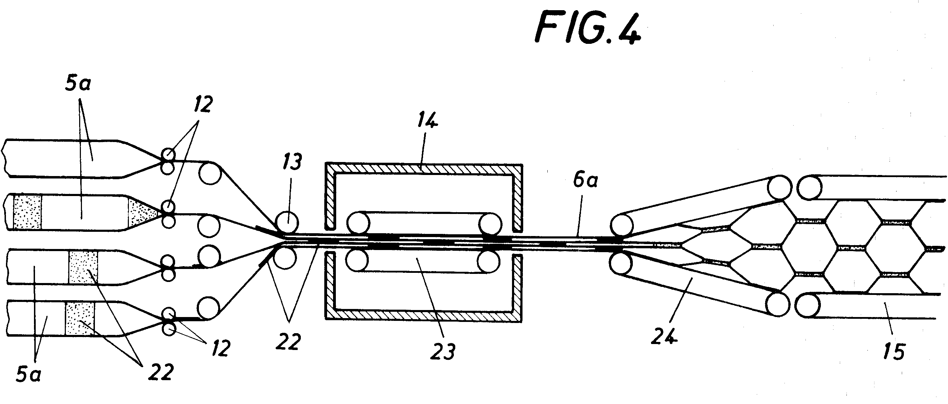

Soll beispielsweise ein Leichtbaukern gemäß Fig. 1 hergestellt werden, nehmen die Speicherrollen 9 glatte Lagenmaterialbänder 5a auf, die wie in Fig. 4 veranschlaulicht, einseitig in regelmäßigen Abständen mit Klebemittel-Querstreifen 22 versehen sind. Zweckmäßigerweise wird ein erst durch eine Druck- oder Wärmebehandlung aktivierbares Klebemittel verwendet, so daß die vorbereiteten Bänder, ohne ein Zusammenkleben befürchten zu müssen, auf den Speicherrollen aufgewickelt werden können. Diese Materialbänder 5a werden nun über die Führungsrollen 10, 11 zusammengeführt und mittels der Führungseinrichtung 12 aufgekantet, wobei der eigentliche Aufbau des Bandpaketes 6 unter einem Versatz der Klebemittel-Querstreifen 22 und bei jeweils gleichgerichteten Bändern 5a erfolgt, so daß die Klebemittelstreifen des einen Bandes jeweils zwischen den Klebestreifen des benachbarten Bandes liegen und die klebestreifentragende Seiten des einen Bandes jeweils mit der klebestreifenfreien Rückseite des anderen Bandes zusammenkommt. Dieses Bandpaket 6a läuft nun in die Preß- und Aushärtstation 14, in der durch eine Bandpresse 23 und eine Wärmebehandlung die Klebemittelstreifen aktiviert und die Bänder 5a miteinander verklebt werden. Nach der Aushärtstation gelangt das verklebte Bandpaket 6a in die Formgebungsstation 15, wo es quer zur Vorschubrichtung unter Verringerung der Vorschubgeschwindigkeit auseinandergezogen wird, so daß sich zwischen den Klebestellen die Hohlräume öffnen. Das Auseinanderziehen des Bandpaketes wird durch Unterdruckeinrichtungen oder mechanischen Einrichtungen 24 durchgeführt.

Besteht nun das Bandmaterial aus Aluminium od. dgl. ist das entstehende Bandpaket grundsätzlich bereits fertig und könnte durch entsprechende Ablängung zu den jeweiligen Leichtbaukernen abgelängt werden. Ist ein zu imprägnierender Werkstoff vorhanden, muß nun das Bandpaket nach der Formgebungsstation 15 durch eine Imprägnierstation 16 geführt werden, wo es von oben über eine Verteildüse 25 mit Imprägnierflüssigkeit besprüht und von dieser durch die Hohlräume hindurch in eine Auffangwanne 26 fließenden Imprägnierflüssigkeit getränkt wird. In der anschließenden Aushärtstation 17 härtet das Imprägniermittel aufgrund einer geeigneten Wärmebehandlung unter gleichzeitiger Einwirkung von Führungs- und Richtwalzen 27 aus, so daß dann erst das formstabile, ablängfertige Bandpaket vorliegt.

Soll ein Leichtbaukern gemäß Fig. 2 hergestellt werden, nehmen die Speicherrollen 9 bereits vorgefertigte Bänder aus Wellpapier od. dgl. auf, die nun ihrerseits gleichgerichtet zusammengeführt und zum Bandpaket zusammengedrückt werden, wobei jeweils ein welliges Band mit einem glatten Band abwechselt. Diese bereits vorgeformten Materialbänder 5 werden gleich in einer Imprägnierstation 16 imprägniert und anschließend in einer Wärmebehandlungsstation 17 ausgehärtet, so daß gleichzeitig eine Verfestigung des Materials und eine Verbindung der Materiallagen entsteht und auf diese Weise ein ablängfertiger Bandpaketstrang 6 hergestellt wird. Bei Bändern aus Aluminium oder anderen nicht zu imprägnierenden Materialien werden die vorgeformten Wellenberge bedarfsweise mit Kleber beschichtet und durch bloßes Verkleben zum Bandpaketstrang verbunden.

Ist, wie in Fig. 3 angedeutet, vor dem Ablängen des Bandpaketes 6 eine Beschichtungsstation 18 vorgesehen, kann im Zuge der Kernherstellung das Bandpaket 6 mit Deckschichten 28 versehen werden, welche Deckschichten von entsprechenden Vorratsrollen 29 abgezogen und flächig an der Ober- und Unterseite auf das Bandpaket aufkaschiert werden. Diese Deckschichten lassen sich dabei in nicht weiter dargestellter Weise in geeigneten Vorbehandlungsstationen vor dem Aufkaschieren imprägnieren, beschichten od. dgl. und so vorbereitet aufbringen, wozu mit einer Heizeinrichtung kombinierbare Doppelbandpressen 30 dienen und auch andere Einrichtungen, wie eine Kühleinrichtung zur Beschleunigung des Abkühlprozesses vorgesehen sein können. Dadurch ergibt sich auch die Möglichkeit, Bandpaket und Deckschichten gemeinsam nachzubehandeln und beispielsweise das Imprägnieren, Aushärten u. dgl. zu rationalisieren.

Durch das Beschichten des Bandpaketes entstehen nach dem Ablängen sofort Verbundplatten, bei denen die Leichtbaukerne die Mittellage und die aufgebrachten Deckschichten die jeweiligen Deckplatten bilden.

## Patentansprüche

1. Verfahren zum Herstellen von Leichtbaukernen (1), bestehend aus einer Mehrzahl miteinander entlang paralleler, gleichmäßig verteilter Streifenbereiche (3) verbundener und zwischen den Verbindungsbereichen Hohlräume (4) bildender Materiallagen (2), bei dem die Materiallagen (2) zusammengeschichtet, verbunden und gegebenenfalls imprägniert und nach einem Aushärten zugeschnitten werden, dadurch gekennzeichnet, daß Lagenmaterialbänder mit einer an die Höhe der herzustellenden Kerne angepaßten Breite vorbereitet und in einer der Materiallagen der Kerne entsprechenden Anzahl zum Aufbau eines Bandpaketes flächig zusammengeführt werden, worauf das entstehende Bandpaket fortlaufend in hintereinander angeordneten Bearbeitungsstationen ausgerichtet, druck- und/oder wärmebehandelt, imprägniert, ausgehärtet, auseinandergezogen, mit Deckschichten versehen, zerschnitten od. dgl. und dann in den Kernlängen entsprechende Stücke abgelängt wird.

2. Verfahren nach Anspruch 1, dadurch gekennzeichnet, daß die einzelnen Materialbänder liegend zuge fördert und nach einem Aufkanten um einen Längs rand stehend zusammengeführt und weiterbehandelt werden.

3. Verfahren nach Anspruch 1 oder 2, dadurch gekennzeichnet, daß zuerst Lagenmaterialbänder aus glatten und welligen Materialbändern zusammengesetzt und dann gleichgerichtet zusammengeführt werden.

4. Verfahren nach Anspruch 1 oder 2, dadurch gekennzeichnet, daß abwechselnd glatte und wellige Lagenmaterialbänder zu einem Bandpaket zusammengeführt werden.

5. Verfahren nach Anspruch 3 oder 4, dadurch gekennzeichnet, daß Lagenmaterialbänder und/oder Materialbänder aus imprägnierten Geweben oder Vliesen, insbesondere Prepregs, verwendet werden.

6. Verfahren nach Anspruch 5, dadurch gekennzeichnet daß auf das Bandpaket fortlaufend Deckstreifen und/oder Seitenstreifen aufgebracht und Bandpaket und Streifen gemeinsam ausgehärtet werden.

7. Verfahren nach Anspruch 5, dadurch gekennzeichnet, daß die Lagenmaterialbänder und/oder Materialbänder vor dem Zusammenführen ausgehärtet und dann miteinander verklebt werden.

8. Verfahren nach Anspruch 1 oder 2, dadurch gekennzeichnet, daß glatte, einseitig in Querstreifen mit regelmäßigen Abständen klebemittelversehene Lagenmaterialbänder verwendet und gleichgerichtet unter jeweiligem Versatz der Klebemittel Querstreifen zusammengeführt werden, worauf das Bandpaket nach einer Druck- und/oder Wärmebehandlung zum Erreichen der Klebeverbindungen bis zu einer bestimmten Kernbreite auseinandergezogen und gegebenenfalls imprägniert und aushärten gelassen wird.

9. Verfahren zum Herstellen von Leichtbaukernen, bestehend aus einer Mehrzahl miteinander entlang gleichmäßig verteilter Streifenbereiche verbundener und zwischen den Verbindungsbereichen Hohlräume bildender Materiallagen, bei dem die Materiallagen zusammengeschichtet, verbunden und gegebenenfalls weiterbehandelt und zugeschnitten werden, dadurch gekennzeichnet, daß glatte und wellige Materiallagen abwechselnd oder aus jeweils einer glatten und welligen Materialbahn zusammengesetzte Materiallagen aufeinandergeschichtet werden.

10. Verfahren nach Anspruch 9, dadurch gekennzeichnet, daß Materiallagen oder Materialbahnen aus imprägnierten Geweben oder Vliesen, insbesondere Prepregs, verwendet werden.
